# EUROPÄISCHE PATENTANMELDUNG

(11) **EP 1 440 784 A1**
(43) Veröffentlichungstag der Anmeldung: **28.07.2004**
(21) Anmeldenummer: 03012403.6
(22) Anmeldetag: 30.05.2003
(51) Int. Cl.: B29C 65/16, B29B 13/02

(54) **Verfahren und Vorrichtung zum Verbinden von Werkstücken aus Kunststoff mittels Laserstrahl**

(71) Anmelder: Leister Process Technologies, 6060 Sarnen (CH)
(72) Erfinder: Chen, Jie-Wei, 6055 Alpnach Dorf (CH); Hirt, Albert, 78056 Villingen-Schweningen (DE); Pironato, Marcel, 6060 Samen (CH)
(74) Vertreter: Klocke, Peter, Dipl.-Ing.

(57) **Zusammenfassung**

Zum Verschweißen mittels Laserdurchstrahlschweißverfahren werden die miteinander zu verbindenden Werkstücke vor dem eigentlichen Schweißvorgang mittels des Lasers in einem großen Volumenbereich vorerwärmt. Zusätzlich kann nach dem Verschweißen auch noch eine Temperung erfolgen. Für die Vorerwärmung ist eine zusätzliche Wärmequelle notwendig, die beispielsweise aus Heißluft, Mikrowelle, Ultraschall, Heißdampf, elektrischen Heizmitteln, Infrarotlampe und induktiven Wechselwirkungen bestehen kann. Durch diese Maßnahme wird erreicht, dass die leicht erwärmten Werkstücke etwas flexibel sind und besser ohne Zwischenraum aneinander verpresst werden können. Damit wird einerseits der eigentliche Schweißvorgang verbessert und darüber hinaus Haarrissen durch Spannungen in den Werkstücken vorgebeugt.

## Beschreibung

Die Erfindung betrifft ein Verfahren zum Verbinden von Werkstücken aus Kunststoff, wobei das obere, einer Laserquelle zugewandte Werkstück aus einem für den Laserstrahl transparenten Material und das untere Werkstück aus einem für den Laserstrahl absorbierendem Material besteht, so dass die aneinander grenzenden Kontaktflächen der beiden Werkstücke aufschmelzen und bei der anschließenden Abkühlung von der Schmelztemperatur unter Druck sich miteinander verbinden. Die Erfindung betrifft außerdem eine Vorrichtung mit einer Laserquelle und einer Auflagefläche zur Durchführung eines derartigen Verfahrens.

Diese Methode des Kunststoffschweißens mit Laserstrahl ist allgemein bekannt und wird auch als Durchstrahlschweißen bezeichnet. Für diese Kunststoffschweißmethode ist es wichtig, dass während des Schweißvorgangs die Werkstücke miteinander verspannt werden, da eine wichtige Voraussetzung für eine gute Schweißverbindung der Kunststoffe mittels Laserstrahlung nicht nur die Energiedosierung, sondern auch der saubere mechanische Kontakt zwischen den beiden miteinander zu verbindenden Fügeflächen ist. Hierzu sind verschiedene Verfahren und Vorrichtungen bekannt, die insbesondere bei flächigen Teilen eine ausreichende Anpresskraft ermöglichen.

Der Grund für das mechanische Zusammenpressen der Werkstücke liegt darin, dass das transparente Fügeteil nur über den absorbierenden Fügepartner durch thermische Kontaktierung erwärmt wird. Deshalb ist die Schweißqualität zum großen Teil von der mechanischen Spannbedingung abhängig. Die Größe des Luftspaltes zwischen zwei Fügeteilen bestimmt hauptsächlich die Qualität der Wärmeleitung zwischen den beiden Teilen.

Der Luftspalt ist meistens durch die Bauteiltoleranz verursacht und aus technischer Sicht nicht auszuschließen. Um diesen Luftspalt zu minimieren, wird Spannkraft benötigt, die die Fügeteile deformiert, um eine flächige Kontaktierung herzustellen. Dabei ist nicht zu vermeiden, dass mechanische Spannungen gleichzeitig durch die Deformation der Fügeteile in diese eingeführt werden. Bei den meisten bekannten Laserdurchstrahlverfahren erfolgt ein schneller und lokaler Erwärmungsprozess. Deshalb werden die durch diese Spannbedingungen eingeführten mechanischen Verzerrungen nach dem Verschweißen der Werkstücke langzeitig gespeichert und führen im Laufe der Zeit zu Mikrorissen.

Um solche Mikrorisse zu verhindern, wurde bereits vorgeschlagen, die Werkstücke nach dem Schweißprozess auf eine gewisse Temperatur zu tempern. Dies führt jedoch zu zusätzlichen Arbeitsschritten und das Abbauen von mechanischen Verzerrungen ist auch nicht 100%ig gewährleistet.

Der vorliegenden Erfindung liegt daher die Aufgabe zugrunde, ein Verfahren und eine Vorrichtung vorzuschlagen, mit der derartige Mikrorisse verhindert werden.

Diese Aufgabe wird erfindungsgemäß durch ein Verfahren mit den Merkmalen des Anspruchs 1 und durch eine Vorrichtung mit den Merkmalen des Vorrichtungsanspruchs gelöst. Weitere vorteilhafte Ausgestaltungen sind den jeweiligen rückbezogenen Unteransprüchen zu entnehmen.

Gemäß der Erfindung erfolgt die Lösung des Problems durch den Einsatz einer zweiten Wärmequelle, die die Werkstücke vorerwärmt, so dass diese geringfügig erweicht werden. Die meisten Kunststoffmaterialien verändern ihre mechanische Festigkeit schon weit vor dem Schmelzpunkt. Sie bleiben trotzdem formfest, aber leicht flexibel. In solch einem Zustand wird die durch die Andrückung verursachte Verzerrung schnell abgeleitet und die Bauformtoleranz der Werkstücke leicht kompensiert. Diese Vorerwärmung führt nicht nur zu einer inneren spannungsfreien Andrückung sondern auch zu einem optimalen thermischen Kontakt zwischen zwei Werkstücken.

Die zweite Wärmequelle kann beispielsweise aus Heißluft, Mikrowelle, Ultraschall, Heißdampf, elektrische Heizmittel, Infrarotlampe und induktive Wechselwirkung bestehen. Die Auswahl ist dabei lediglich von dem Material der miteinander zu verbindenden Werkstücke abhängig. Die Anordnung dieser zweiten Wärmequelle kann direkt in eine Lasereinrichtung integriert sein oder als Vorerwärmungseinrichtung vor dem Laserschweißprozess in der Produktionslinie angeordnet werden.

Gemäß dem erfindungsgemäßen Verfahren werden vor dem durch den Laserstrahl verursachten Schmelzvorgang an den Kontaktflächen, die Werkstücke in einem dreidimensionalen Bereich, der größer ist als der durch den Laserstrahl aufgeschmolzene Bereich, mittels einer zweiten Wärmequelle erwärmt, in einen flexiblen aber weiterhin formfesten Zustand gebracht und anschließend die flexiblen Werkstücke unter Formanpassung zusammengepresst. Der dreidimensionale Bereich erstreckt sich sowohl durch das erste als auch durch das zweite Werkstück und ist vom Volumen ein Vielfaches größer als der Bereich, der von dem Laserstrahl aufgeschmolzen wird. Die Erwärmungstemperatur liegt andererseits wesentlich unter der vom dem Laserstrahl im Bereich der Kontaktfläche aufgebrachten Temperatur, da im vorliegenden Fall lediglich eine gewisse Flexibilisierung der Werkstücke erreicht werden soll, um sie beim Zusammenpressen in der Form anpassen zu können. Prinzipiell ist es auch möglich, nur ein Werkstück zu erwärmen.

Gemäß einer weiteren Ausbildung des Verfahrens werden die Werkstücke auch nach dem Verbinden während eines vorgegebenen Zeitraums getempert. Vorzugsweise ist die Tempertemperatur entsprechend der Vorerwärmungstemperatur. Durch die nachträgliche Temperung wird eine mögliche zu schnelle Abkühlung mit Eintritt der Spannung zwischen den Werkstücken verhindert.

Gemäß einer weiteren Ausbildung des Verfahrens wird das Erwärmen und Tempern der Werkstücke und das Lenken des Laserstrahls auf die zu verbindende Stelle gleichzeitig, vorzugsweise in einem Bearbeitungskopf durchgeführt. Genauso ist es auch möglich, das Erwärmen und Tempern der Werkstücke und das Zusammendrücken der Werkstücke sowie das Lenken des Laserstrahls auf die zu verbindende Stelle und das Zusammendrücken der Werkstücke gleichzeitig durchzuführen.

Gemäß dem Verfahren kann die Erwärmung der Werkstücke direkt in der nächsten Umgebung des Laserstrahls erfolgen. Eine andere Möglichkeit besteht darin, die Erwärmung der Werkstücke zusammen mit dem Verspannen zu realisieren oder in einer Fertigungslinie beim Durchlauf der zu verschweißenden Werkstücke vor der Schweißstation anzuordnen.

Gemäß einer weiteren Ausgestaltung des Verfahrens, wird bei der Verschweißung von Hohlkörpern als absorbierendes Werkstück mit einem transparenten Werkstück dieser von innen her erwärmt. Dies kann beispielsweise mittels Heißluft erfolgen, die von außen, beispielsweise über Schläuche, eingeblasen wird und die dann den Hohlkörper ausreichend erwärmt, damit er an das transparente Werkstück ohne Zwischenraum während des Schweißvorgangs anpassbar ist. Durch die Heißluft wird auf einfache Art und Weise eine großflächige Erwärmung ermöglicht, da diese sich in dem Innenraum verteilt.

Die Vorrichtung gemäß der Erfindung weist eine Heizeinrichtung auf, die in Bewegungsrichtung des Laserstrahls oder des Werkstückes vor dem Aufschmelzen der Werkstücke an den Kontaktflächen angeordnet ist. Hierbei sind die vorstehend erwähnten Varianten möglich.

Gemäß einer bevorzugten Ausbildung ist auch eine Heizeinrichtung in Bewegungsrichtung des Laserstrahls und des Werkstückes nach dem Aufschmelzen der Werkstücke an den Kontaktflächen angeordnet.

Gemäß einer bevorzugten Ausbildung weist die Vorrichtung einen Bearbeitungskopf mit Fokussiereinrichtungen für den Laserstrahl auf die Kontaktfläche auf in den mindestens eine Heizeinrichtung zum Lenken von Wärme auf die Werkstücke integriert ist. Vorzugsweise weist der Bearbeitungskopf eine für den Laserstrahl transparente Kugel oder Rolle an dem den Werkstücken zugewandten Ende, die drehbar gelagert ist, und in Werkstückrichtung Austrittsöffnungen für Heißluft auf. Dies ermöglicht die exakte Zuführung von Wärme über beispielsweise einen Ringkanal um den Laserstrahl, so dass eine optimale Vorwärmung und auch Temperung der Werkstücke, insbesondere bei kleinen mikromechanischen Bauteilen realisiert werden kann.

Nachfolgend wird die Erfindung anhand von Ausführungsbeispielen in Verbindung mit den begleitenden Zeichnungen näher erläutert.

Es stellen dar:
- Figur 1: die Schnittdarstellung durch einen Bearbeitungskopf mit einer integrierten Heizeinrichtung;
- Figur 2: eine Spannvorrichtung mit integrierter Heizeinrichtung;
- Figur 3: die perspektivische Ansicht einer Heizeinrichtung, die in die Fertigungslinie integriert ist; und
- Figur 4: die perspektivische Darstellung der Realisierung des Verfahrens bei der Verschweißung einer Autoscheinwerferscheibe mit dem Gehäuse.

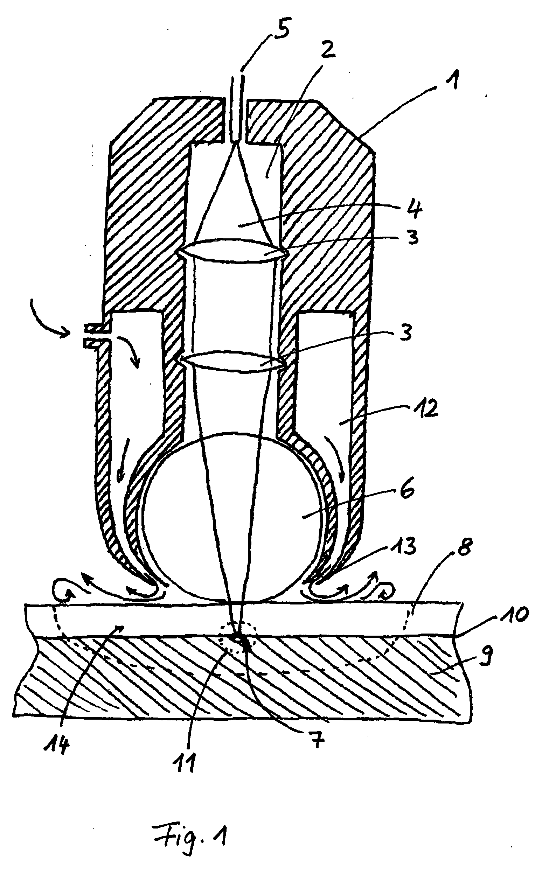

Figur 1 zeigt einen Bearbeitungskopf 1, der einen Hohlraum 2 aufweist, in den optische Elemente wie beispielsweise den Laserstrahl 4 formende Linsen 3 angeordnet sind. Der Laserstrahl gelangt über eine Lichtleitfaser 5 in den Hohlraum 2 und wird über die Linsen sowie über eine am Ende angeordnete Glaskugel 6 in bekannter Weise auf die Fügestelle 7 zwischen dem oberen transparenten Werkstück 8 und dem unteren absorbierenden Werkstück 9 fokussiert. Die Glaskugel 6 wirkt hinsichtlich der Fokussierung mit den Linsen 3 zusammen.

Die Fügestelle 7 ist im Bereich der Kontaktfläche 10 zwischen den beiden Werkstücken 8 und 9 und bildet eine Laserbearbeitungszone 11, in der die für den Laservorgang erforderliche Erwärmung, d.h. Aufschmelzung erfolgt.

In dem Bearbeitungskopf 1 befinden sich außerdem ein Ringraum 12, der den Hohlraum 2 mit der am unteren Ende angeordneten Glaskugel 6 umgibt und im Bereich der Glaskugel eine oder mehrere Austrittsöffnungen 13 aufweist. In diesen Ringraum 12 wird in dem Ausführungsbeispiel Heißluft eingeblasen. Grundsätzlich ist es genauso möglich, Kaltluft einzublasen und für eine Erwärmung innerhalb des Ringraumes 12 beispielsweise durch geeignete elektrische Heizelemente zu sorgen.

Aus der Austrittsöffnung 13 tritt die, wie durch Pfeile angedeutet, Heißluft aus und erwärmt die beiden Werkstücke 8 und 9 in der gestrichelt dargestellten Erwärmungszone 14. Aufgrund der Ausbildung des Bearbeitungskopfes erfolgt dadurch eine Erwärmung um die Laserbearbeitungszone 11 in alle Richtungen. Die Erwärmungszone 14 ist viel größer als die Laserbearbeitungszone 11 und erstreckt sich in Bearbeitungsrichtung gesehen von vor der Laserbearbeitungszone 11 bis hinter die Laserbearbeitungszone 11. Dadurch findet sowohl eine Vorerwärmung als auch ein Tempern der Werkstücke 8, 9 statt.

Bei diesem Ausführungsbeispiel wird der Bearbeitungskopf 1 gleichzeitig als Heißluftdüse verwendet und durch die Erwärmung der Umgebung der zu bearbeitenden Stelle werden mechanische Verzerrungen abgebaut bzw. verhindert. Der Ausgang für die Heißluft ist in diesem Fall ständig mit dem Laserstrahl zusammen. Dabei muss die Erwärmungsgeschwindigkeit zwischen zwei Erwärmungsquellen (Laser und Heißluft) synchronisiert werden, um die gewünschte Erwärmungswirkung zu erzielen.

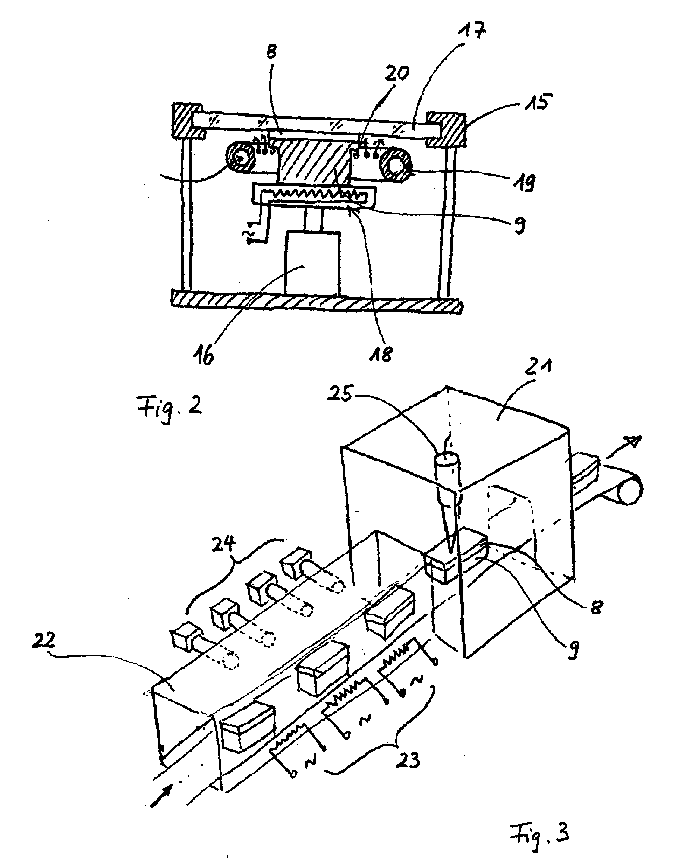

Da für die Vorerwärmung eine gewisse Aufheizzeit benötigt wird, kann die Wärmequelle zur Vorerwärmung direkt in einer Spannvorrichtung integriert werden. Dabei muss die Anordnung dieser Wärmequelle den zusammenfügenden Werkstücken angepasst werden, um die gewünschte Effizienz der Vorerwärmung zu erhalten. Figur 2 zeigt ein Ausführungsbeispiel mit einer Spannvorrichtung 15, die einen Spannzylinder 16 aufweist, der die beiden miteinander zu verbindenden Werkstücke 8, 9 gegen eine Glasplatte 17 presst. In dem Ausführungsbeispiel ist beispielhaft die Aufnahmeplatte 18 elektrisch beheizbar ausgebildet, um das Werkstück 9 aufzuheizen. Genauso ist es möglich, die Glasplatte 17 entsprechend zu heizen. Zusätzlich oder alternativ kann, wie in der Figur dargestellt, ein Heizring 19 um das Werkstück 9 angeordnet werden, der Luftaustrittsdüsen 20 aufweist, über die dem Heizring 19 zugeführte heiße Luft austreten kann und die Werkstücke 8, 9 erwärmt werden können.

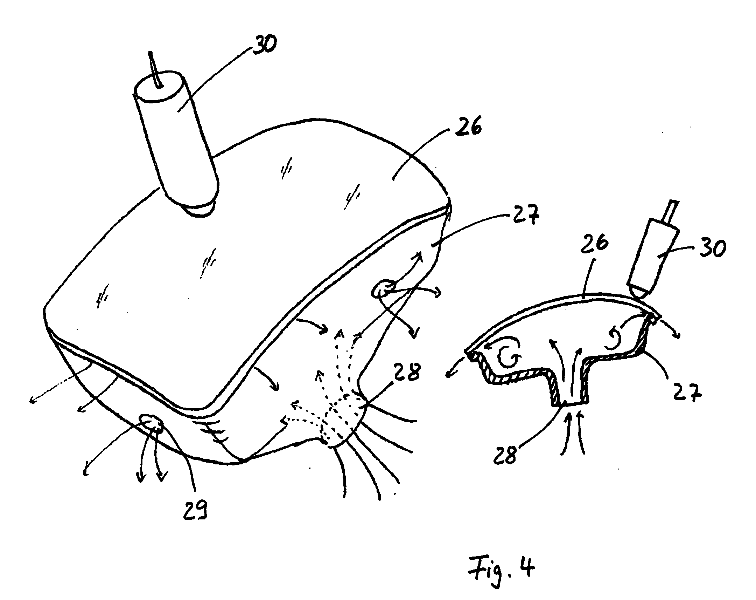

Figur 3 zeigt eine Ausführung, bei der vor einer Laserschweißzelle 21 eine Vorerwärmungszelle 22 angeordnet wird, die entweder mittels einer elektrischen Heizung 23 oder mittels Lufterhitzer 24 die miteinander zu verbindenden Werkstücke 8, 9 vorerwärmt, bevor sie durch die in der Laserschweißzelle 21 angeordnete Lasereinrichtung 25 verschweißt werden. Eine entsprechende Vorrichtung kann auch noch nach der Laserschweißzelle 21 angeordnet werden, um die Temperung zu bewirken. Bei dieser Anordnung steht ausreichend Zeit für die Vorerwärmung zur Verfügung.

Figur 4 zeigt die Möglichkeit der Verschweißung einer Autoscheinwerferscheibe 26 mit dem Autoscheinwerfergehäuse. Hierbei wird Heißluft, wie durch Pfeile angedeutet, über die ohnehin vorhandene Öffnung 28 eingeblasen, die durch die Undichtigkeiten in dem Gehäuse und die darin ohnehin vorhandenen weiteren Öffnungen 29 austreten kann. Dabei erfolgt die Erwärmung des Gehäuses 27 und auch der Autoscheinwerferscheibe 26, so dass mittels eines in Figur 1 dargestellten ähnlichen Bearbeitungskopfes 30, der allerdings keine zusätzliche Heizeinrichtung wie in Figur 1 dargestellt benötigt, die Verschweißung durchgeführt werden kann.

Mit der vorliegenden Erfindung wird einerseits der eigentliche Schweißvorgang verbessert und darüber hinaus Haarrissen durch Spannungen in den Werkstücken vorgebeugt.

## Patentansprüche

1. Verfahren zum Verbinden von Werkstücken aus Kunststoff, wobei das obere, einer Laserquelle zugewandte Werkstück (8) aus einem für den Laserstrahl (4) transparenten Material und das untere Werkstück (9) aus einem für den Laserstrahl (4) absorbierendem Material besteht, so dass die aneinander grenzenden Kontaktflächen der beiden Werkstücke aufschmelzen und bei der anschließenden Abkühlung von der Schmelztemperatur unter Druck sich miteinander verbinden, **dadurch gekennzeichnet, dass** vor dem durch, den Laserstrahl (4) verursachten Schmelzvorgang an den Kontaktflächen, die Werkstücke (8, 9) in einem dreidimensionalen Bereich (14), der größer ist als der durch den Laserstrahl (4) aufgeschmolzene Bereich (11), mittels einer zweiten Wärmequelle (13, 19, 23, 24) erwärmt, in einen flexiblen aber weiterhin formfesten Zustand gebracht und anschließend die flexiblen Werkstücke (8, 9) unter Formanpassung zusammengepresst werden.

2. Verfahren nach Anspruch 1, **dadurch gekennzeichnet, dass** die Werkstücke (8, 9) nach dem Verbinden einen vorgegebenen Zeitraum, vorzugsweise mit der Temperatur der Vorerwärmung, getempert werden.

3. Verfahren nach Anspruch 1 oder 2, **dadurch gekennzeichnet, dass** das Erwärmen und Tempern der Werkstücke (8, 9) und das Lenken des Laserstrahls (4) auf die zu verbindende Stelle, oder das Erwärmen und Tempern der Werkstücke und das Zusammendrücken der Werkstücke sowie das Lenken des Laserstrahls auf die zu verbindende Stelle und das Zusammendrücken der Werkstücke gleichzeitig, vorzugsweise in einem Bearbeitungskopf (1), durchgeführt wird.

4. Verfahren nach Anspruch 3, **dadurch gekennzeichnet, dass** die Fokusebene des Bearbeitungskopfes (1) durch eine IR-durchlässiges Anpresselement (6), vorzugsweise drehbares Anpresselement, und ein integriertes Linsenssystem (3) bestimmt und durch das in dem Bearbeitungskopf integrierte Linsensystem (3) eingestellt wird.

5. Verfahren nach Anspruch 1 oder 2, **dadurch gekennzeichnet, dass** bei der Verbindung eines Hohlkörpers (27) als absorbierendes Werkstück mit einem transparenten Werkstück (26) der Hohlkörper von Innen mittels Heißluft erwärmt wird.

6. Vorrichtung zum Verbinden von Werkstücken aus Kunststoff mit einer Laserquelle (5), wobei das obere, der Laserquelle (5) zugewandte Werkstück (8) aus einem für den Laserstrahl (4) transparenten Material und das untere Werkstück (9) aus einem für den Laserstrahl (4) absorbierendem Material besteht, so dass die aneinander grenzenden Kontaktflächen der beiden Werkstücke (8, 9) aufschmelzen und bei der anschließenden Abkühlung von der Schmelztemperatur unter Druck sich miteinander verbinden, wobei die Werkstücke (8, 9) auf einer Fläche aufliegen, **gekennzeichnet durch** eine Heizeinrichtung (13, 23, 24), die in Bewegungsrichtung des Laserstahls (4) oder der Werkstücke (8, 9) vor dem Aufschmelzen der Werkstücke (8, 9) an den Kontaktflächen angeordnet ist.

7. Vorrichtung nach Anspruch 6, **dadurch gekennzeichnet, dass** eine Heizeinrichtung (13) in Bewegungsrichtung des Laserstahls (4) oder der Werkstücke (8, 9) nach dem Aufschmelzen der Werkstücke an den Kontaktflächen angeordnet ist.

8. Vorrichtung nach Anspruch 5 oder 6, **gekennzeichnet durch** einen Bearbeitungskopf (1) mit Fokussiereinrichtungen (3, 6) für den Laserstrahl (4) auf die Kontaktfläche (10) und mindestens einer integrierten Heizeinrichtung (13) zum Lenken von Wärme auf die Werkstücke (8, 9).

9. Vorrichtung nach Anspruch 8, **dadurch gekennzeichnet, dass** der Bearbeitungskopf (1) eine für den Laserstrahl (4) transparente Kugel (6) oder Rolle an dem den Werkstücken (8. 9) zugewandten Ende aufweist, die drehbar gelagert ist, und in Werkstückrichtung Austrittsöffnungen (13) für Heißluft aufweist.
